# EUROPÄISCHE PATENTSCHRIFT

(11) **EP 3 515 770 B1**
(45) Veröffentlichungstag und Bekanntmachung des Hinweises auf die Patenterteilung: **08.07.2020**
(21) Anmeldenummer: 17749606.4
(22) Anmeldetag: 21.07.2017
(51) Int. Cl.: B60T 13/68, B60T 15/04, B60T 17/18

(54) **PARKBREMS-VENTILEINRICHTUNG ZUR ANSTEUERUNG EINER FEDERSPEICHERFESTSTELLBREMSE**
PARKING BRAKE VALVE DEVICE FOR ACTUATING A SPRING-TYPE PARKING BRAKE
ARRANGEMENT DE VANNES DE FREIN DE STATIONNEMENT POUR COMMANDER UN FREIN D'IMMOBILISATION À RESSORT ACCUMULATEUR

(30) Priorität: 21.09.2016 DE 102016011390
(43) Veröffentlichungstag der Anmeldung: 31.07.2019
(73) Patentinhaber: WABCO Europe BVBA, 1170 Brüssel (BE)
(72) Erfinder: VAN THIEL, Julian, 30161 Hannover (DE)
(74) Vertreter: Koschnitzki, Thomas
(86) Internationale Anmeldenummer: PCT/EP2017/000889
(87) Internationale Veröffentlichungsnummer: WO 2018/054513

(56) Entgegenhaltungen:
- DE-A1- 3 434 884
- DE-A1- 3 447 477

## Beschreibung

Die Erfindung betrifft eine Parkbrems-Ventileinrichtung zur Ansteuerung einer Federspeicher-Feststellbremse, sowie ein elektro-pneumatisches Bremssystem mit einer derartigen Parkbrems-Ventileinrichtung.

Federspeicher-Feststellbremsen von Nutzfahrzeugen sind im drucklosen bzw. entlüfteten Zustand selbstsperrend und werden über eine Parkbrems-Ventileinrichtung befüllt bzw. belüftet, sodass das Fahrzeug nachfolgend mit der gelösten Federspeicher-Feststellbremse losfahren kann.

Hierbei sind insbesondere elektro-pneumatische Handbrems (EPH)-Systeme bekannt, die ein Lösen und Feststellen der Federspeicher-Feststellbremse bzw. Parkbremse durch elektrische Betätigungen ermöglichen. Aus Gründen der Sicherheit sowie gesetzlicher Vorgaben sind diese vorzugsweise bistabil ausgebildet, sodass sowohl der Parkzustand mit eingelegter Federspeicher-Feststellbremse (Parkbremse) auch ohne Bestromung als auch der Fahrzustand mit gelöster bzw. befüllter Federspeicher-Feststellbremse sicher gehalten wird.

Leckagen der Ventile können je nach Ausführung, insbesondere bei einem "eingesperrten" Druck, grundsätzlich ungewolltes Verstellen des jeweiligen Modus bzw. Zustand bewirken.

DE 34 34 884 A1 offenbart ein Schutzsystem für eine Kraftfahrzeug-Druckluftanlage sowie eine elektro-pneumatische Parkbrems-Ventileinrichtung zur Ansteuerung einer Federspeicher-Feststellbremse in einem elektro-pneumatischen Bremssystem.

Der Erfindung liegt die Aufgabe zugrunde, eine elektro-pneumatische Parkbrems-Ventileinrichtung zu schaffen, die mit geringem Aufwand eine hohe Sicherheit ermöglicht.

Diese Aufgabe wird durch eine elektro-pneumatische Parkbrems-Ventileinrichtung nach Anspruch 1 gelöst. Die Unteransprüche beschreiben bevorzugte Weiterbildungen. Weiterhin ist ein elektro-pneumatisches Bremssystem mit einer derartigen Parkbrems-Ventileinrichtung vorgesehen.

Somit ist ein Steuervolumen vorgesehen, das zur Aussteuerung eines den Druckluft-Eingang und Druckluft-Ausgang verbindenden Relaisventils vorgesehen ist und über eine elektrisch angesteuerte Einlass- und Auslass-Ventileinrichtung einstellbar ist, das heißt insbesondere mit dem Druckluft-Eingang verbindbar ist zum Befüllen des Steuervolumens (Druckerhöhung zum Erreichen eines Steuerdrucks), und mit einem Entlüftungsanschluss verbindbar ist zum Entlüften des Steuervolumens (Drucksenken).

Hierbei ist eine Bypass-Ventileinrichtung vorgesehen, durch die mindestens einer der Anschlüsse, insbesondere der Druckluft-Eingang und/oder dem Entlüftungsanschluss, mit dem Steuervolumen des Relaisteils verbindbar ist; somit dient die Bypass-Ventileinrichtung zur Ausbildung einer Bypassleitung, die ein Einlassventil und/oder Auslassventil umgeht. Die Bypass- Ventileinrichtung wird hierbei durch den Steuerdruck im Steuervolumen des Relais selbsttätig gehalten.

Die Bypass-Ventileinrichtung kann hierbei ein am Druckluft-Eingang vorgesehenes, vorzugsweise im Grundzustand sperrendes Eingangs-Bypass-Ventil aufweisen , um das elektrisch ansteuerbare Einlassventil zu umgehen; weiterhin kann die Bypass-Ventileinrichtung ein an dem Entlüftungsanschluss vorgesehenes, vorzugsweise im Grundzustand offenes Ausgangs-Bypass-Ventil aufweisen, das somit eine Entlüftung des Steuervolumens in dessen drucklosen Grundzustand ermöglicht und hierbei das elektrisch ansteuerbare Auslassventil umgeht. Die Bypassventile können somit durch den Steuerdruck des Steuervolumes jeweils in ihre andere Stellung geschaltet werden.

Im Falle zum Beispiel einer Leckage am Auslassventil in Fahrstellung (Feststellbremse gelöst) hält das befüllte Steuervolumen vorzugsweise selbsttätig das Eingangs-Bypass-Ventil offen, sodass die belüftete Stellung, zum Lösen der Feststellbremse, sicher gehalten wird. Entsprechend ermöglicht im Falle einer Leckage am Einlassventil in der Parkstellung, in der das Steuervolumen entlüftet ist, das offene Ausgangs-Bypass-Ventil eine sofortige Entlüftung der durch die Leckage einströmenden Druckluft, sodass sich kein relevanter Steuerdruck im Steuervolumen aufbauen kann und daher die Parkstellung sicher gehalten wird.

Hierdurch werden bereits einige Vorteile erreicht: so ist ein selbsttätig haltendes System geschaffen, dessen Durchlassstellung zum Befüllen und somit Lösen der Federspeicher-Feststellbremse selbsttätig gehalten wird: auch bei unbestromter Einlass- und Auslass-Ventileinrichtung, bei der somit das Steuervolumen nicht mehr mit dem Druckluft-Eingang verbunden ist, bleibt die Bypass-Ventileinrichtung bei befülltem Steuervolumen selbsttätig offen. Bei unbefülltem bzw. drucklosem Steuervolumen ist das Eingangs-Bypass- Ventil vorteilhafterweise in seine geschlossene bzw. Sperr-Stellung verstellt, sodass das Steuervolumen sicher getrennt ist, und somit die unbefüllte Feststellbremse selbsttätig eingelegt bleibt. Entsprechend kann in der Parkstellung kein selbsttätiges Lösen der Bremse erfolgen.

Hierbei können das Eingangs-Bypass-Ventil und Ausgangs- Bypass-Ventil jeweils als 2/2- Sperrventile ausgebildet sein, oder sie werden z. B. als eine einheitliche Bypass-Ventileinrichtung, z. B. als 3/2-Wegeventil kombiniert.

Weiterhin kann auch die Einlass- und Auslass-Ventileinrichtung mit z. B. zwei 2/2-Sperrventilen, oder auch z. B. mit einem 3/2-Ventil zur Ansteuerung des Einlasses und der Entlüftung ausgebildet sein; hier bestehen grundsätzlich keine Beschränkungen in der Ausbildung.

Die Bypass-Ventileinrichtung kann einteilig oder mehrteilig einfach, kostengünstig und platzsparend ausgebildet sein. Bei einer separaten Ausbildung kann somit z. B. das Eingangs-Bypass-Ventil mit einem Ventil, z. B. einem pneumatisch angesteuerten Ventil, insbesondere als 2/2-Sperrventil ausgebildet sein, wobei die Ansteuerung durch das Steuervolumen zum Beispiel durch einen ersten pneumatischen Steuereingang ermöglicht wird, der das Eingangs-Bypass-Ventil in die Durchlassstellung verstellt. Dieser erste pneumatische Steuereingang kann gemäß einer Ausbildung gegen einen mit dem Druckluft-Eingang verbundenen zweiten pneumatischen Steuereingang mit kleineren Wirkungsquerschnitt drücken; somit sind sichere VentilStellungen sichergestellt, da bei angeschlossenem, befülltem Druckluft-Speicher und drucklosem Steuervolumen zunächst das Bypass-Ventil in seine Sperrstellung geschaltet ist, das heißt ein entlüftetes Steuervolumen zum Sperren des Druckluft-Ausgangs vom Druckluft-Eingang sichergestellt ist, und bei befülltem Steuervolumen der größere Wirkungsquerschnitt des ersten pneumatischen Steuereingangs das Bypass-Ventil sicher in dessen Durchlassstellung verstellt.

Entsprechend kann das Ausgangs-Bypass-Ventil als im Grundzustand offenes, z. B. federvorgespanntes 2/2-Sperrventil ausgebildet sein, dessen pneumatischer Steuereingang an das Steuervolumen angeschlossen ist. Die Wirkungsweise des Eingangs-Bypass-Ventils kann hier entsprechend auf das Ausgangs-Bypass-Ventil übertragen werden.

Alternativ hierzu kann - insbesondere bei dem Eingangs-Bypass-Ventil - die Rückstellung statt durch einen zweiten pneumatischen Steuereingang auch zum Beispiel durch eine entsprechend dimensionierte erste Vorspann-Feder erreicht werden, die geringer ist als die Verstellwirkung des ersten pneumatischen Steuereingangs.

Bei einer Ausbildung mit den zwei pneumatischen Steuereingängen kann eine zweite Vorspann-Feder das Eingangs-Bypass-Ventil in die Durchlassstellung öffnen. Eine derartige Ausbildung ist insbesondere vorteilhaft, wenn eine Entlüftung der Federspeicher-Feststellbremse und somit ein Einlegen der Parkbremse bei fehlender Bestromung, zum Beispiel einem elektrischen Totalausfall, ermöglicht werden soll. So ermöglichen elektro-pneumatische Bremssysteme oftmals ein Entlüften der Druckluftspeicher über das Bremspedal, durch wiederholte Betätigung bzw. "Pumpen" am Bremspedal, mit dem der Fahrer die Druckluft abgibt und somit das Druckluftsystem entleeren kann. Hierbei sind in Mehrkreisschutzventil-Ausbildungen, bei denen zunächst die verschiedenen Druckluftkreise wie erster Betriebsbremskreis, zweiter Betriebsbremskreis und Parkbrems-Bremskreis voneinander getrennt sind, Bypassleitungen für derartige Entleer-Vorgänge ermöglicht, sodass durch das Entleeren eines der Betriebsbrems-Kreise auch der Parkbrems-Kreis entleert werden kann. Somit kann der Benutzer über das Bremspedal zunächst ein Betriebsbremskreis entleeren, und nachfolgend somit zur Druckreduzierung des (dritten) Druckluft-Speichers für den Parkbrems-Kreis sorgen, an den die Parkbrems-Ventileinrichtung angeschlossen ist. Hierbei ist vorteilhafterweise ein zwischen dem Druckluftspeicher und der Parkbremse geschaltetes Rückschlagventil außerhalb der Bypassleitung vorgesehen und verhindert somit nicht die Entleerung des Steuerdrucks des Steuervolumens am Relaisventil, das durch das im drucklosen Zustand bzw. insbesondere drucklosem Druckluftspeicher selbsttätig öffnende Eingangs-Bypass-Ventil zum Vorrat ermöglicht wird.

Somit kann der Fahrer zum Beispiel beim elektrischen Totalausfall und einer Stellung am Hang zunächst die Betriebsbremse betätigen, und nachfolgend durch Ablassen der Druckluft die Parkbremse einlegen.

Die Parkbrems-Ventileinrichtung kann insbesondere in einem einzigen Gehäuse bzw. als eine Baueinheit ausgebildet werden, mit einem Druckluft-Eingang zum Anschluss an einen Druckluft-Speicher, einen Druckluft-Ausgang zum Anschluss der Federspeicher-Feststellbremse sowie einem Entlüftungsanschluss, wobei eine elektronische Steuereinrichtung (ECU) zur Ansteuerung der elektrischen Ventileinrichtung vorteilhafterweise an der Einheit bzw. dem Gehäuse der Parkbrems-Ventileinrichtung befestigt werden kann, sodass eine sichere elektrische Kontaktierung sichergestellt ist. Somit bilden die Parkbrems-Ventileinrichtung mit der ECU ein Parkbrems-Modul, das als Ganzes angeschlossen werden kann.

Gemäß einer vorteilhaften Ausbildung sind die Bypassleitungen am Eingang und/oder Ausgang gedrosselt bzw. in geöffnetem Zustand mit verringertem Durchlass-Querschnitt ausgebildet; gedrosselter bzw. verringerter Durchlass-Querschnitt bedeutet insbesondere, dass der Luftstrom gegenüber den durch die Einlass- und Auslass- Ventileinrichtung geregelten Luftströmen des Befüllens des Steuervolumens und/oder Entlüften des Steuervolumens geringer ist.

In den beiden stationären Zuständen (Fahrstellung und Parkbremsstellung) hat die Drosselung hierbei keine Wirkung, und führt auch nicht zu einem trägeren Verhalten, da die Bypass-Ventile jeweils in einer der beiden Stellungen sind. Da das Steuervolumen insbesondere lediglich zur Ansteuerung eines Relaisventils vorgesehen ist, liegt auch in der Durchlassstellung der Parkbrems-Ventileinrichtung kein Druckluftverbrauch des Steuervolumens vor, sodass die Bypassleitung - abgesehen von kleinen Leckagen - nicht durchströmt wird. Relevant werden die Drosselungen jedoch bei den Umschaltvorgängen zwischen den stationären Zuständen, d.h. beim Entlüften und Belüften des Steuervolumens:

Beim Entlüften des Steuervolumens, wenn somit zum Beispiel ein elektrisch angesteuertes Auslassventil das Steuervolumen mit dem Entlüftungsanschluss verbindet, zunächst jedoch das Steuervolumen das Einlass-Bypassventil in dessen geöffneter Durchlassöffnung festhält, wird durch die Drosselung verhindert, dass vom Druckluft-Eingang zunächst nachströmende Druckluft sofort die über die Entlüftung erreichte Druckluft-Ausgabe kompensiert und sich somit das Steuervolumen selbsttätig - in ungewollter Weise - in seiner befüllten Stellung hält. Durch die Drosselung wird somit sichergestellt, dass eine Entlüftung des Vorsteuerbereichs erreicht wird, bis dessen abgesenkter Druck nicht mehr zum Aussteuern der Bypass-Ventileinrichtung ausreicht und diese in ihre Sperrstellung schaltet.

Entsprechend kann beim Belüften des Steuervolumens, wenn das Steuervolumen noch drucklos und das Ausgangs-Bypass-Ventil in seiner offenen Grundstellung ist, durch das zum Beispiel elektrisch angesteuerte Einlassventil einströmende Druckluft - ungewollt - sofort durch das offene Ausgangs-Bypass- Ventil wieder zur Entlüftung ausströmen, bevor der sich im Steuervolumen ausbildende Steuerdruck hinreichend groß ist, dass er das Ausgangs- Bypass- Ventil schließt; durch die Ausgangs-Drossel wird jedoch ein schnelles Ausströmen verhindert, so dass ein sicherer Druckaufbau ermöglicht ist.

Somit wird durch ein relativ einfaches Mittel, nämlich eine Drosselung, eine sichere Entlüftung bzw. Belüftung des Steuervolumens und somit ein sicherer Umschaltvorgang zwischen den stationären Stellungen ermöglicht.

Die Drosselung der Bypassleitungen kann auf verschiedene Weise erreicht werden, zum Beispiel durch eine Drossel in der Bypassleitung vor oder hinter dem Bypass-Ventil, oder auch als Querschnittsverengung im Bypass-Ventil.

Die Erfindung wird im Folgenden anhand der beiliegenden Zeichnungen an einigen Ausführungsformen erläutert. Es zeigen:
Fig. 1 ein elektropneumatisches Schaltbild eines Ausschnitts aus einem Bremssystem mit einer Parkbrems-Ventileinrichtung gemäß einer ersten Ausführungsform der Erfindung;
Fig. 2 ein elektropneumatisches Schaltbild mit einer Parkbrems-Ventileinrichtung gemäß einer zweiten Ausführungsform der Erfindung;
Fig. 3 ein elektropneumatisches Schaltbild mit einer Parkbrems-Ventileinrichtung gemäß einer dritten Ausführungsform der Erfindung;
Fig. 4 ein elektropneumatisches Schaltbild mit einer Parkbrems-Ventileinrichtung gemäß einer vierten Ausführungsform der Erfindung; und
Fig. 5 ein elektropneumatisches Schaltbild eines Ausschnitts aus einem Bremssystem mit einer Parkbrems-Ventileinrichtung gemäß einer fünften Ausführungsform der Erfindung.

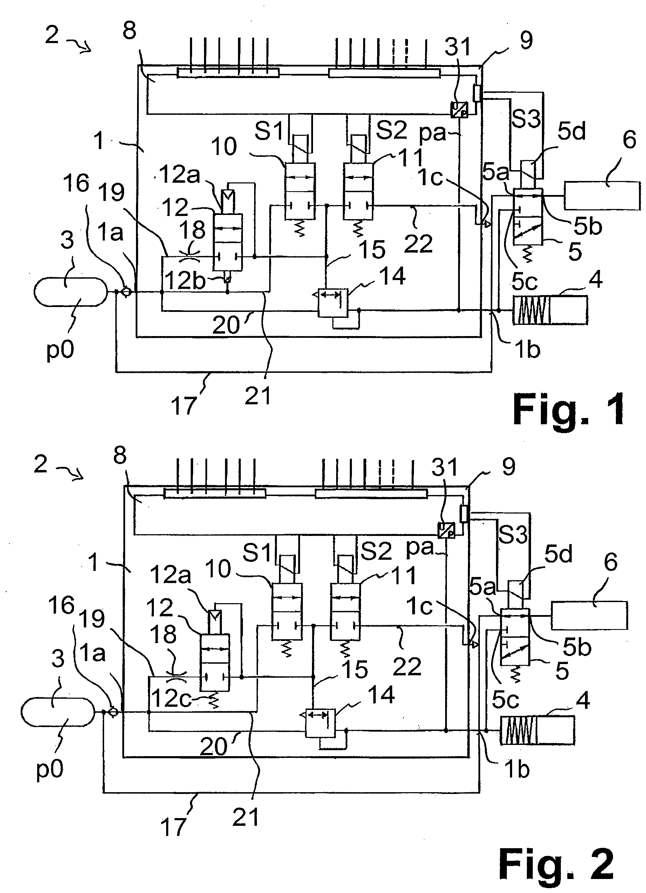

Fig. 1 zeigt ein elektro-pneumatisches Schaltschema eines hier relevanten Ausschnitts eines elektro-pneumatischen Bremssystems 2 eines Nutzfahrzeugs, das eine elektro-pneumatische Parkbrems-Ventileinrichtung 1, weiterhin unter anderem einen Druckluft-Speicher 3 zur Druckluftversorgung, eine durch die Parkbrems-Ventileinrichtung 1 angesteuerte Federspeicher-Feststellbremse (Parkbremse) 4, die im drucklosen, nicht befüllten Zustand eingelegt ist und durch Belüften bzw. Druckluft-Befüllung freigegeben wird, und ein Bremsdruck-Steuerventil 5 zur Druckluftversorgung eines Trailer-Control-Ventils (TCV) für ein nachfolgendes Anhänger (Trailer)- Bremssystems 6 auf. Die Parkbrems-Ventileichrichtung 1 wird von einer elektronischen Steuereinrichtung (ECU) 8 angesteuert und bildet mit der ECU 8 ein Parkbrems-Modul 9. Hierbei ist die Parkbrems-Ventileinrichtung 1 zum Beispiel in einem Gehäuse, zum Beispiel einem Druckgussgehäuse ausgebildet, auf dem die ECU 8 direkt angesetzt und kontaktiert ist, wodurch eine kompaktes Parkbrems-Modul 9 gebildet wird.

Die Parkbrems-Ventileinrichtung 1 gemäß der Ausführungsform der Figur 1 weist ein Einlassventil 10 und ein Auslassventil 11 auf, die beide als 2/2-Sperrventile (2/2-Solenoid-Ventile) mit sperrendem Grundzustand ausgebildet sind und über die elektrischen Steuersignale S1 und S2 von der ECU 8 angesteuert werden. Weiterhin weist die Parkbrems-Ventileinrichtung 1 ein Bypass-Ventil 12 auf, das gemäß der Ausführungsform der Figur 1 bistabil und doppelt wirkend pneumatisch als 2/2-Sperrventil ausgebildet ist mit einem ersten pneumatischen Steuereingang 12a mit größerer pneumatischer Wirkfläche (pneumatisches Betätigungsmittel mit größerem Querschnitt) und einem zweiten pneumatischen Steuereingang 12b mit kleinerer pneumatischer Wirkfläche. Ein Relaisventil 14 dient zur Mengenverstärkung und wird von einem Steuervolumen 15 angesteuert, sodass es einen Druckluft-Eingang 1a der Parkbrems-Ventileinrichtung 1mit einem Druckluft-Ausgang 1b verbindet. Ein Drucksensor 31 ist an den Druckluft-Ausgang 1b angeschlossen und misst den Ausgabe-Druck pa.

Gemäß der Ausführungsform der Figur 1 ist zwischen dem Druckluftspeicher 3 und dem Druckluft-Eingang 1a ein Rückschlagventil 16 vorgesehen, das gemäß anderen Ausführungsformen auch innerhalb der Parkbrems-Ventileinrichtung 1 ausgebildet sein kann. Der Druckluft-Eingang 1a ist zum einen an das Einlassventil 10 angeschlossen, das in seiner Grundstellung, das heißt S1=0, zunächst sperrt. Weiterhin ist der zweite pneumatische Steuereingang 12b des Bypass-Ventils 12 angeschlossen, der somit mit dem Versorgungsdruck p0 beaufschlagt ist; in einer nicht befüllten Ausgangsposition ist das Steuervolumen 15 zunächst drucklos, sodass der erste pneumatische Steuereingang 12a, der von dem Steuervolumen 15 angesteuert ist, nicht mit Druck beaufschlagt ist. Somit ist das Bypass-Ventil 12 zunächst in der Figur 1 gezeigten sperrenden Stellung, die die Parkstellung der Parkbrems-Ventileinrichtung 1 darstellt. Auch das Auslassventil 11 ist zunächst in seiner sperrenden Grundstellung, das heißt S2=0. Das vom Steuervolumen 15 angesteuerte Relaisventil 14 sperrt entsprechend.

Gemäß Figur 1 ist an den Druckluftspeicher 3 weiterhin das Bremsdruck-Steuerventil 5 mit einem ersten Druckluft-Eingang 5a über die Versorgungsleitung 17, die gemäß Figur 1 außerhalb der Parkbrems-Ventileinrichtung 1, grundsätzlich jedoch auch innerhalb des Gehäuses der Parkbrems-Ventileinrichtung 1 verlaufen kann, angeschlossen und wird hier über ein drittes elektrisches Steuersignal S3 direkt von der ECU 8 angesteuert, sodass es unabhängig von der Parkbrems-Ventileinrichtung 1 geöffnet und geschlossen werden kann und so die Anhängerkontrollstellung unterstützt wird.

Die Federspeicher-Feststellbremse 4 ist im nicht-belüfteten Zustand und wird durch Belüften bzw. Befüllen mit Druckluft gelöst, sodass das Fahrzeug weg fahren kann. Hierzu ist somit im Steuervolumen 15 ein hinreichender Steuerdruck auszubilden, der das Relaisventil 14 aussteuert, sodass dieses den Druckluft-Eingang 1a mit dem Druckluft-Ausgang 1b verbindet. Ein Einlegen, das heißt Entlüften der Federspeicher-Feststellbremse 4 erfolgt bei nicht betätigtem Relaisventil 14, das heißt drucklosem Steuervolumen 15.

Zum Lösen der Federspeicher-Feststellbremse 4 steuert die ECU 8 das Einlassventil 10 über das erste Steuersignal S1 an, sodass es den Druckluft-Eingang 1a an das Steuervolumen 15 legt. Hierdurch wird das Relaisventil 14 ausgesteuert und verbindet somit den Druckluft-Eingang 1a mit dem Druckluft-Ausgang 1b, wodurch die Parkbremse 4 belüftet wird. Weiterhin wirkt das Steuervolumen 15 nunmehr auf den ersten pneumatischen Steuereingang 12a des Bypass-Ventils 12. Da der Wirkungsquerschnitt des ersten pneumatischen Steuereinganges 12a größer als der Wirkungsquerschnitt des zweiten pneumatischen Steuereingangs 12b ist, wird somit das Bypass-Ventil 12 von der in Figur 1 gezeigten blockierenden Stellung in seine geöffnete Stellung geschaltet, in der es den Druckluft-Eingang 1a direkt mit dem Steuervolumen 15 verbindet, wobei in dieser Verbindung eine Drossel 18 vorgesehen ist, gemäß Figur 1 vor dem Bypass-Ventil 12. Somit wird eine gedrosselte Bypassleitung 19 geöffnet, die bei S1=0 parallel oder als Bypass zum Einlassventil 10 dient. Somit kann nachfolgend das Einlassventil 10 durch S1=0 ausgeschaltet werden, da das Bypass-Ventil 12 die gedrosselte Bypassleitung 19 offen hält und somit das Steuervolumen 15 weiterhin mit hinreichendem Vorsteuerdruck p15 befüllt wird. Somit wird die Fahrstellung bzw. Stellung gelöster Federspeicher-Feststellbremse 4 erreicht, die ohne weitere elektrische Ansteuerung, das heißt mit S1=0, S2=0, S3=0 stabil ist.

Zum Entlüften des Steuervolumens 15 wird bei geschlossenem Einlassventil 10 das Auslassventil 11 geöffnet, das heißt S1=0 und S2=1, sodass das Steuervolumen 15 an einen Entlüftungsanschluss 1c gelegt wird. Somit wird das Steuervolumen 15 entlüftet, das Relaisventil 14 geschlossen und der zur Aussteuerung des ersten pneumatischen Steuergang 12a erforderliche Vorsteuerdruck p15 nicht mehr erreicht, sodass das bistabile Bypass-Ventil 12 wiederum in seine in Figur 1 gezeigte Sperrstellung umschaltet, da am Druckluft-Eingang 1a weiterhin der Versorgungsdruck p0 anliegt. Nach Beenden der Entlüftung, das heißt bei S1=0, S2=0, wird wiederum die Parkstellung der Figur 1 erreicht, mit eingelegter Federspeicher-Feststellbremse 4.

Wenn bei der Parkbrems-Ventileinrichtung 1 in der Fahrstellung, das heißt mit hinreichendem Vorsteuerdruck p15 im Steuervolumen 15 und befüllter Federspeicher-Feststellbremse 4, eine Leckage am Auslassventil 11 vorliegt, kann grundsätzlich Druckluft aus dem Steuervolumen 15 zum Entlüftungsanschluss 1c - in ungewollter Weise - entweichen. Da jedoch noch hinreichend Druck im Steuervolumen 15 vorliegt, hält das Steuervolumen 15 selbstständig das Bypass-Ventils 12 in dessen Durchlassstellung, sodass über die gedrosselte Bypassleitung 19 hinreichend Druckluft nachfließt. Somit sind diese Anordnungen jeweils gegen eine Leckage am Auslassventil 11 geschützt.

Die Drossel 18 in der Bypassleitung 19 dient insbesondere dazu, den Entlüftungsvorgang des Steuervolumens 15 sicher zu stellen: in der Fahrstellung ist zunächst das Bypass-Ventil 12 in seiner Durchlassstellung, bei sperrendem Einlassventil 10 und sperrendem Auslassventil 11. Wenn nachfolgend mit S1=0, S2=0 die Entlüftung des Steuervolumens 15 eingeleitet wird, fließt zwar Druckluft über den Entlüftungsanschluss 1c ab; da jedoch zunächst der Druck im Steuervolumen 15 hinreichend hoch ist zur Aussteuerung des Bypass-Ventils 12 in dessen Durchlassstellung, fließt wiederum Druckluft über den Drucklufteingang 1a und die Bypassleitung 18 in das Steuervolumen 15 nach. Somit bildet sich ein dynamischer Zustand aus, bei dem zunächst gegebenenfalls nicht sicher gestellt wäre, dass der Druck im Steuervolumen 15 hinreichend abfällt, um die Rückstellung des Bypass-Ventils 12 in dessen Sperrstellung zu erreichen; durch die Drossel 18 wird jedoch sichergestellt, dass der Druckluft-Fluss über die Bypassleitung 19 geringer ist als der Druckluft-Fluss, der vom Steuervolumen 15 über das Auslassventil 11 abgegeben wird. Somit sinkt der Druck im Steuervolumen 15, bis dann das Bypass-Ventil 12 in seine Sperrstellung schaltet, sodass die sichere Parkstellung erreicht wird.

Bei der Ausführungsform der Figur 2 ist anstelle des zweiten pneumatischen Steuergangs 12b eine erste Vorspann-Feder 12c vorgesehen, die das Bypass-Ventil 12 in dessen Sperrstellung vorspannt. Somit ist das Bypass-Ventil 12 in der Ausführungsform der Figur 2 nicht mehr bistabil, sondern ein pneumatisch angesteuertes 2/2-Sperrventil mit sperrender Grundstellung. Hierbei ist die Federkraft der Vorspann-Feder 12c derartig dimensioniert, dass das Bypass-Ventil 12 bei dem zur Aussteuerung ausreichenden Vorsteuerdruck p15 im Steuervolumen 15 ausgesteuert wird in seine offene Stellung bzw. Durchlassstellung schaltet. Hierbei wird der Vorsteuerdruck p15 insbesondere durch den Systemdruck p0 erreicht. Solange der Druckluftspeicher 3 mit Systemdruck p0 gefüllt ist, entsprechen sich somit die Ausführungsformen der Figur 1 und 2 in ihrer funktionellen Wirkung.

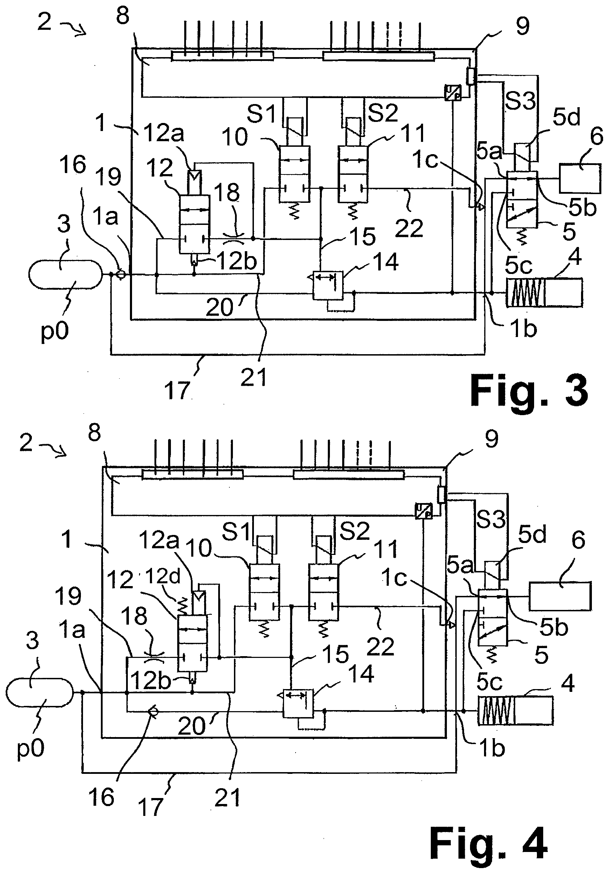

Bei der Ausführungsform der Figur 3 ist die Drossel 18 weiterhin in der Bypassleitung 19, jedoch - vom Druckluft-Eingang 1a ausgesehen - hinter dem Bypass-Ventil 12 angeordnet. Hierbei kann ein zweiter pneumatischer Steuereingang 12b gemäß Figur 1, oder auch die Vorspann-Feder 12c gemäß Figur 2 vorgesehen sein; somit lassen sich die Ausführungsformen der Figuren 1, 2 und 3 beliebig kombinieren. Vorteilhaft ist, wenn die Drossel 18 derartig in der Bypassleitung 19 vorgesehen ist, dass das Steuervolumen 15 auf den ersten pneumatischen Steuereingang 12a einwirkt, das heißt vorteilhafterweise der erste pneumatisch Steuereingang 12a nicht über die Drossel 18 vom dem Vorsteuerbereich 15 getrennt in der Bypassleitung 19 vorgesehen ist, da hierdurch die Dynamik des Umschaltvorgangs negativ beeinflusst werden kann.

Entsprechend kann die Drossel 18 zum Beispiel auch in dem Bypass-Ventil 12, das heißt mit gedrosselter oder gedüster Bohrung, ausgebildet sein.

Gemäß der Ausführungsform der Figur 4 ist eine zweite Vorspann-Feder 12d vorgesehen, die das Bypass-Ventil 12 in dessen Durchlassstellung vorspannt, das heißt in gleicher Richtung wie der erste pneumatische Steuereingang 12a wirkt. Auch hier ist nur die Anordnung der Drossel 18 innerhalb der Bypassleitung 19 relevant. Das Bypass-Ventil 19 ist somit in seine geöffnete Stellung vorgespannt, wobei die Federstärke der zweiten Vorspann-Feder 12d derartig klein bemessen ist, dass bei vorliegendem Systemdruck p0 am Druckluft-Eingang 1a und zunächst drucklosen Steuervolumen 15 (p15=1 bar) die in Figur 4 gezeigte Sperrstellung erreicht ist, das heißt der Systemdruck p0 am zweiten pneumatischen Steuereingang 12b ist hinreichend groß, um die Federkraft der zweiten Vorspann-Feder 12d zu überwinden, solange das Steuervolumen 15 drucklos ist. Die zweite Vorspann-Feder 12d dient jedoch dazu, bei im Falle eines fehlenden Systemdrucks p0, das heißt bei entleertem Druckluftspeicher 3 oder einer Leckage am Druckluft-Eingang 1a, das Bypass-Ventil 12 in seine Durchlassstellung zu schalten, sodass das Steuervolumen 15 über den Druckluft-Eingang 1a entleert werden kann.

Gemäß der Ausführungsform der Figur 4 ist das Rückschlagventil 16 nur in der Relaisventil-Leitung 20, das heißt nicht bereits in der Versorgungsleitung von dem Druckluftspeicher 3 zu dem Druckluft-Eingang 1a; somit ist das Rückschlagventil 16 auch nicht vor der Bypassleitung vorgesehen.

Die Ausführungsform der Figur 4 ist insbesondere auch dafür vorgesehen, dass ein Benutzer bei einem elektrischen Systemausfall, bei dem die ECU 8 somit keine Steuersignale ausgeben und keine elektrischen Verstellungen bewirken kann, dennoch die Parkbremse einlegen kann:
Wenn das Fahrzeug zum Beispiel am Hang steht und ein Stromausfall des gesamten pneumatischen Bremssystems 2 auftritt, kann der Fahrer auch ohne zusätzliche Energiespeicher die Parkbremse einlegen. Hierzu entleert der Fahrer vorteilhafterweise den Druckluft-Speicher 3 durch wiederholte Betätigung des Bremspedals, was als "Pumpen am Bremspedal" bekannt ist. Beim elektro-pneumatischen Bremssystem mit einem Mehrkreisschutzventil ist im Allgemeinen ein Bypass vorgesehen, der eine Entleerung dieses Druckluftspeichers 3 durch einen derartigen Pumpvorgang, der sich zunächst auf die Betriebsbremse bzw. die weiteren Bremskreise auswirkt, ermöglicht. Gemäß der Ausführungsform der Figur 4 kann somit die Federspeicher-Feststellbremse 4 entleert werden, sodass die Federspeicher- Feststellbremse 4 im entlüfteten Zustand sperrt. Die Entleerung über das Steuervolumen 15 das Bypass-Ventil 12, das aufgrund des drucklosen Druckluftspeichers 3 in seine geöffnete Stellung geschaltet ist, was insbesondere auch durch die zweite Vorspann-Feder 12d sichergestellt ist, auch wenn im Steuervolumen 15 bereits kein hinreichender Vorsteuerdruck p15 mehr vorliegt. Somit wird das Relaisventil in die unbestätigte Schaltstellung gebracht und die Federspeicher-Feststellbremse 4 nachfolgend über die Entlüftung am Relaisventil entlüftet.

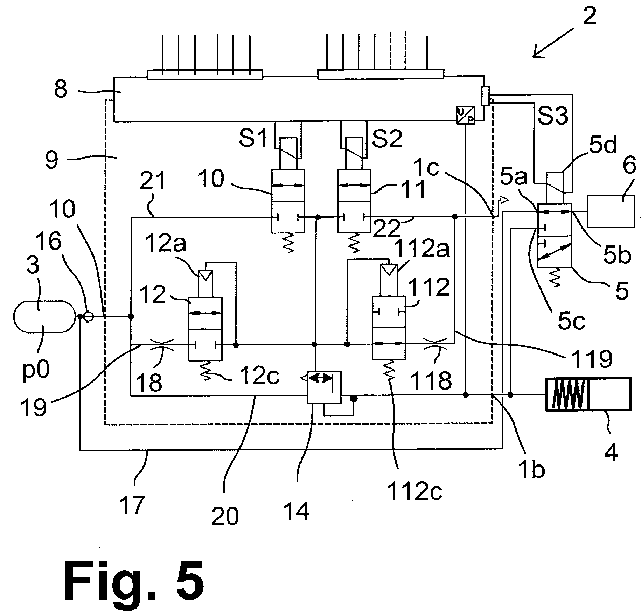

Die Ausführungsform der Fig. 5 zeigt eine Weiterbildung, bei der die Bypass-Ventileinrichtung zusätzlich zu dem Eingangs-Bypass-Ventil 12 weiterhin ein Ausgangs-Bypass-Ventil 112 aufweist, das in einer zwischen dem Steuervolumen 15 und dem Entlüftungsanschluss 1c ausgebildeten gedrosselten Ausgangs-Bypass-Leitung 119 vorgesehen ist. Auch ein pneumatischer Steuereingang 112a des Ausgangs-Bypass-Ventil 112 ist an das Steuervolumen 15 angeschlossen; anders als das Eingangs-Bypass-Ventil 12 weist das Ausgangs-Bypass-Ventil 112 jedoch eine offene Grundstellung auf und wird durch den Steuerdruck des Steuervolumens 15 in seine Sperrstellung betätigt.

Fig. 5 ist hierbei beispielhaft als Abwandlung zu Fig. 2 gezeichnet, d.h. mit ersten Vorspannfedern 12c und 112c; auch sind rein beispielhaft die Eingangs-Drossel 18 und Ausgangs-Drossel 118 jeweils - bezogen auf den Anschluss 1a, 1c - vor das jeweilige Bypass-Ventil 12, 113 vorgesehen.

Wenn in der Fahrstellung, d.h. bei unbefülltem Steuervolumen 15, eine Leckage am Einlassventil 10 oder auch dem Eingangs-Bypass-Ventil 12 auftritt, fließt die einströmende Druckluft direkt durch das offene Ausgangs-Bypass-Ventil 112 zu dem Entlüftungsanschluss 1c ab. Ein Schaltvorgang mit S1=1, bei dem somit das Einlassventil 10 geöffnet und die Parkbremse eingelegt wird, führt wiederum zu einer schnellen Erhöhung des Drucks in dem Steuervolumen 15 , so dass die Druckluft nicht hinreichend schnell über die Ausgangs-Drossel 118 abgeführt werden kann, so dass ein hinreichender Steuerdruck im Steuervolumen 15 erreicht wird und das Ausgangs-Bypass-Ventil 112 aussteuert und schließt.

Hierbei können sämtliche Ausführungsformen beliebig miteinander kombiniert werden; insbesondere kann somit das Prinzip der Ausführungsform der Fig. 5 nicht nur als Weiterentwicklung der Fig. 2, sondern auch auf die anderen Ausführungsformen übertragen werden.

### Bezugszeichenliste (Teil der Beschreibung)

- 1: Parkbrems-Ventileinrichtung
- 1a: Druckluft-Eingang
- 1b: Druckluft-Ausgang
- 1c: Entlüftungsanschluss
- 2: elektro-pneumatisches Bremssystem
- 3: Druckluft-Versorgung, insbesondere Druckluft-Speicher
- 4: Federspeicher-Feststellbremse, Parkbremse, Feststellbremse
- 5: Bremssystem-Steuerventil (5)
- 6: Trailer-Control-Ventil für ein Anhänger-Bremssystem
- 8: ECU, elektronische Steuereinrichtung
- 9: Parkbrems-Modul
- 10: Einlassventil, selbstsperrendes 2/2-Solenoidventil
- 11: Auslassventil, selbstsperrendes 2/2-Solenoidventil
- 12: Eingangs-Bypass-Ventil, pneumatisch angesteuert, mit Sperrstellung und Durchlassstellung,
- 12a: erster pneumatischer Steuereingang mit großer Wirkungsfläche, großem Wirkungsquerschnitt
- 12b: zweiter pneumatischer Steuereingang mit kleinem Wirkungsquerschnitt, kleiner Wirkungsfläche
- 12c: erste Vorspann-Feder zur Vorspannung in die Sperrstellung
- 12d: zweite Vorspann-Feder zum Vorspannen in die Durchlassstellung
- 14: Relaisventil
- 15: Steuervolumen
- 16: Rückschlagventil
- 17: Trailer-Versorgungsleitung
- 18: Eingangs-Drossel

- 19: gedrosselte Eingangs-Bypass-Leitung
- 20: Relaisventil-Leitung
- 21: Einlass-Leitung
- 22: Entlüftungs-Leitung
- 31: Drucksensor
- 112: Ausgangs-Bypass-Ventil, pneumatisch angesteuert, mit Sperrstellung und Durchlassstellung,
- 112a: pneumatischer Steuereingang des Ausgangs-Bypass-Ventils mit großer Wirkungsfläche, großem Wirkungsquerschnitt
- 112c: Vorspann-Feder zur Vorspannung in die Sperrstellung
- 118: Ausgangs-Drossel
- 119: gedrosselte Ausgangs-Bypass-Leitung
- p0: Systemdruck, Versorgungsdruck
- p15: Vorsteuerdruck, im befüllten Steuervolumen 15, z. B. etwa Systemdruck p0
- pa: Ausgabedruck

- S1: erstes elektrisches Steuersignal für das Einlassventil 10
- S2: zweites elektrisches Steuersignal für das Auslassventil 11
- S3: drittes elektrisches Steuersignal für das Bremssystem-Steuerventil 5

## Patentansprüche

1. Elektro-pneumatische Parkbrems-Ventileinrichtung (1) zur Ansteuerung einer Federspeicher-Feststellbremse (4) in einem elektro-pneumatischen Bremssystem (2), wobei die Parkbrems-Ventileinrichtung (1) bistabil mit einer Fahrstellung und einer Parkstellung als stationäre Stellungen ausgebildet ist und aufweist:
drei pneumatische Anschlüsse (1a, 1b, 1c), die einen Druckluft-Eingang (1a) zum Anschluss an eine Druckluft- Versorgung (3), einen Druckluft-Ausgang (1b) zum Anschluss an die Federspeicher-Feststellbremse (4), und einen Entlüftungsanschluss (1c) ausbilden,
eine den Druckluft-Eingang (1a) und Druckluft-Ausgang (1b) verbindenden Relaisventil-Leitung (20) mit einem in der Relaisventil-Leitung (20) vorgesehenen, durch ein Steuervolumen (15) pneumatisch ansteuerbaren Relaisventil (14),
eine elektrisch ansteuerbare Einlass- und Auslass-Ventileinrichtung (10, 11) zum Belüften des Steuervolumens (15) durch Verbinden mit dem Druckluft-Eingang (1a) und Entlüften des Steuervolumens (15) durch Verbinden mit dem Entlüftungsanschluss (1c),
**dadurch gekennzeichnet, dass**
zwischen dem Steuervolumen (15) und mindestens einem der Anschlüsse (1a, 1c) eine Bypass-Leitung (19, 119) mit einer durch das Steuervolumen (15) pneumatisch angesteuerten Bypass- Ventileinrichtung (12, 112) vorgesehen ist zum Verbinden oder Trennen des Steuervolumens (15) mit dem mindestens einen Anschluss (1a, 1c), und
in mindestens einer der stationären Stellungen die Bypass- Ventileinrichtung (12, 112) durch das Steuervolumen (15) derartig angesteuert ist,
dass sie die Einlass- und Auslass-Ventileinrichtung (10, 11) zumindest teilweise überbrückt und das Steuervolumen (15) mit dem mindestens einen Anschluss (1a, 1c) verbindet.

2. Parkbrems-Ventileinrichtung (1) nach Anspruch 1, **dadurch gekennzeichnet, dass** die Bypass-Ventileinrichtung (12, 112) mindestens ein zwischen einer Sperrstellung und einer Durchlassstellung verstellbares Bypass-Ventil (12, 112a) aufweist, das einen ersten pneumatischen Steuereingang (12a, 112a) aufweist, der durch das Steuervolumen (15) ansteuerbar ist zum selbsttätigen Halten des Bypass-Ventils (12) in dessen betätigter Stellung bei befülltem, unter Steuerdruck stehendem Steuervolumen (15).

3. Parkbrems-Ventileinrichtung (1) nach Anspruch 2, **dadurch gekennzeichnet, dass** bei nicht unter Steuerdruck stehendem Steuervolumen (15) das mindestens eine Bypass-Ventil (12) durch eine Gegenkraft in seine Grundstellung schaltbar ist.

4. Parkbrems-Ventileinrichtung (1) nach Anspruch 3, **dadurch gekennzeichnet, dass** die Gegenkraft ausgebildet ist durch einen an den Eingangs-Anschluss (1a) angeschlossenen zweiten pneumatischen Steuereingang (12b) mit kleinerer Wirkfläche als die Wirkfläche des ersten pneumatische Steuereingangs (12a, 112a).

5. Parkbrems-Ventileinrichtung (1) nach Anspruch 3, **dadurch gekennzeichnet, dass** die Gegenkraft ausgebildet ist durch eine erste Vorspann-Feder (12c, 112c).

6. Parkbrems-Ventileinrichtung (1) nach Anspruch 5, **dadurch gekennzeichnet, dass** das Bypass-Ventil (12) durch eine zweite Vorspann-Feder (12d) bei drucklosem ersten und zweiten pneumatischen Steuereingang (12c, 12d) in seine Durchlassstellung vorgespannt ist.

7. Parkbrems-Ventileinrichtung (1) nach einem der vorherigen Ansprüche, **dadurch gekennzeichnet, dass** die Bypassleitung (19, 119) gegenüber einer durch die Einlass- und Auslass-Ventileinrichtung (10, 11) geschalteten Einlassleitung (21) und/oder Entlüftungsleitung (22) gedrosselt oder mit einem verringertem Querschnitt ausgebildet ist, zur Begrenzung eines Druckluft-Stroms durch mindestens ein offenes Bypass-Ventil (12, 112) der Bypass-Ventileinrichtung (12, 112).

8. Parkbrems-Ventileinrichtung (1) nach Anspruch 7, **dadurch gekennzeichnet, dass** in der Bypassleitung (19, 119) vor, hinter oder in dem Bypass-Ventil (12, 112) der Bypass-Ventileinrichtung (12, 112) eine Drossel (18, 118) angeordnet ist.

9. Parkbrems-Ventileinrichtung (1) nach einem der vorherigen Ansprüche, **dadurch gekennzeichnet, dass** die Einlass- und Auslass- Ventileinrichtung (11, 12) ein elektrisch angesteuertes, zwischen einer Sperrstellung und Durchlassstellung schaltbares Einlassventil (10) zum Verbinden des Steuervolumens (15) mit dem Druckluft-Eingang (1a), und ein zwischen einer Sperrstellung und Durchlassstellung schaltbares, elektrisch angesteuertes Auslassventil (11) zum Verbinden des Steuervolumens (15) mit dem Entlüftungsanschluss (1c) aufweist,
wobei das Einlassventil (10) und das Auslassventil (11) unabhängig voneinander ansteuerbar sind, zum Beispiel durch ein erstes elektrisches Steuersignal (S1) und ein zweites elektrisches Steuersignal (S2).

10. Parkbrems-Ventileinrichtung (1) nach Anspruch 9, **dadurch gekennzeichnet, dass**
die Bypass-Ventileinrichtung (12, 112) eine zwischen den Druckluft-Eingang (1a) und das Steuervolumen (15) geschaltete Eingangs-Bypass-Leitung (19) mit einem das Einlassventil (10) überbrückenden Eingangs-Bypass-Ventil (12) aufweist,
wobei das Eingangs-Bypass-Ventil (12) durch das mit Steuerdruck gefüllte Steuervolumen (15) selbsttätig in seiner betätigten Durchlassstellung gehalten wird,
wobei im Fall einer Leckage des in Sperrstellung geschalteten Auslassventils (11) das mit Steuerdruck gefüllte Steuervolumen (15) das Eingangs-Bypass-Ventil (12) selbsttätig in dessen geöffneter Durchlassstellung hält, zur Vermeidung einer ungewollten Entlüftung des Steuervolumens (15).

11. Parkbrems-Ventileinrichtung (1) nach Anspruch 9 oder 10, **dadurch gekennzeichnet, dass**
die Bypass-Ventileinrichtung (12, 112) eine zwischen den Entlüftungsanschluss (1c) und das Steuervolumen (15) geschaltete Ausgangs-Bypass-Leitung (119) mit einem das Auslassventil (11) überbrückenden Ausgangs-Bypass-Ventil (112) aufweist,
wobei das Ausgangs-Bypass-Ventil (112) in seiner Grundstellung bei nicht mit Steuerdruck gefülltem Steuervolumen (15) in Durchlassstellung ist zum Entlüften von Leckagen des sperrenden Einlassventils (10) und bei Ausbildung des Steuerdrucks in dem Steuervolumen (15) in seiner betätigte Sperrstellung gehalten wird zur Vermeidung einer Entlüftung.

12. Parkbrems-Ventileinrichtung (1) nach einem der vorherigen Ansprüche, **dadurch gekennzeichnet, dass** im Falle einer fehlenden elektrischen Bestromung der Druckluft-Ausgang (1b) über das Relaisventil (14), das Steuervolumen (15) und die Bypassleitung (19) entleerbar ist.

13. Parkbrems-Ventileinrichtung (1) nach einem der vorherigen Ansprüche, **dadurch gekennzeichnet, dass** sie mit einem einzigen Gehäuse ausgebildet ist.

14. Elektro-pneumatisches Bremssystem (2), das eine Parkbrems- Ventileinrichtung (1) nach einem der vorherigen Ansprüche, einen an den Druckluft-Eingang (1a) angeschlossene Druckluft-Versorgung (3), eine an den Druckluft-Ausgang (1b) angeschlossene Federspeicher- Feststellbremse (4) und eine elektronische Steuereinrichtung (8) zur Ansteuerung der Einlass- und Auslass-Ventileinrichtung (10, 11) aufweist.

15. Elektro-pneumatisches Bremssystem (2) nach Anspruch 14, **dadurch gekennzeichnet, dass** es weiterhin ein an die Druckluft-Versorgung (3) angeschlossenes, durch die elektronische Steuereinrichtung (8) angesteuertes Bremssystem-Steuerventil (5) zum Befüllen eines Anhänger-Bremskreises und/oder Anschluss an ein Trailer-Control-Ventil (6) aufweist, wobei der Anhänger-Bremskreis und/oder das Trailer-Control-Ventil (6) durch das Bremssystem-Steuerventil (5) an den Druckluft-Ausgang (1b) schaltbar ist.

16. Elektro-pneumatisches Bremssystem (2) nach Anspruch 15, **dadurch gekennzeichnet, dass** ein Rückschlag-Ventil (16) zwischen der Druckluft-Versorgung, insbesondere einem Druckluft-Speicher (3), und dem Druckluft-Ausgang (1b) des elektro-pneumatischen Bremssystems (2) vorgesehen ist, wobei eine Trailer-Versorgungsleitung (17) zwischen der Druckluft-Versorgung (3) und dem Bremssystem-Steuerventil (5) außerhalb des Rückschlagventils (16) liegt.

## Claims

1. Electro-pneumatic parking brake valve device (1) for actuating a spring-loaded parking brake (4) in an electro-pneumatic brake system (2), wherein the parking brake valve device (1) is of bi-stable design with a drive position and a parking position as steady-state positions and comprises:
three pneumatic ports (1a, 1b, 1c), which form a compressed air inlet (1a) for connection to a compressed air supply (3), a compressed air outlet (1b) for connection to the spring-loaded parking brake (4) and a venting port (1c),
a relay valve line (20) connecting the compressed air inlet (1a) and the compressed air outlet (1b) and having a relay valve (14) provided in the relay valve line (20) and pneumatically actuatable by a control volume (15),
an electrically actuatable inlet and outlet valve device (10, 11) for ventilating the control volume (15) through connection to the compressed air inlet (1a) and venting the control volume (15) through connection to the venting port (1c),
**characterized in that**
a bypass line (19, 119) having a bypass valve device (12, 112) pneumatically actuated by the control volume (15) is provided between the control volume (15) and at least one of the ports (1a, 1c) for connecting the control volume (15) to the at least one port (1a, 1c) or separating it therefrom, and
the bypass valve device (12, 112) is actuated by the control volume (15) in at least one of the steady-state positions, in such a way that it at least partially bypasses the inlet and outlet valve device (10, 11) and connects the control volume (15) to the at least one port (1a, 1c).

2. Parking brake valve device (1) according to Claim 1, **characterized in that** the bypass valve device (12, 112) comprises at least one bypass valve (12, 112a) adjustable between a closed position and a passage position, which comprises a first pneumatic control inlet (12a, 112a), which can be actuated by the control volume (15) for automatically holding the bypass valve (12) in its activated position when the control volume (15) is filled under control pressure.

3. Parking brake valve device (1) according to Claim 2, **characterized in that** when the control volume (15) is not under control pressure the at least one bypass valve (12) can be switched to its normal position by a counterforce.

4. Parking brake valve device (1) according to Claim 3, **characterized in that** the counterforce is formed by a second pneumatic control inlet (12b), connected to the inlet port (1a) and having a smaller effective area than the effective area of the first pneumatic control inlet (12, 112a).

5. Parking brake valve device (1) according to Claim 3, **characterized in that** the counterforce is formed by a first pre-tensioning spring (12c, 112c).

6. Parking brake valve device (1) according to Claim 5, **characterized in that** the bypass valve (12) is biased into its passage position by a second pre-tensioning spring (12d) when the first and second pneumatic control inlets (12c, 12d) are unpressurized.

7. Parking brake valve device (1) according to one of the preceding claims, **characterized in that** the bypass line (19, 119) is restricted or is formed with a reduced cross section compared to an inlet line (21) and/or venting line (22) switched by the inlet and outlet valve device (10, 11), for limiting a compressed air flow through at least one open bypass valve (12, 112) of the bypass valve device (12, 112).

8. Parking brake valve device (1) according to Claim 7, **characterized in that** a restrictor (18, 118) is arranged in the bypass line (19, 119) upstream, downstream or in the bypass valve (12, 112) of the bypass valve device (12, 112).

9. Parking brake valve device (1) according to one of the preceding claims, **characterized in that** the inlet and outlet valve device (11, 12) comprises an electrically actuated inlet valve (10) that can be switched between a closed position and a passage position for connecting the control volume (15) to the compressed air inlet (1a), and an electrically actuated outlet valve (11) that can be switched between a closed position and a passage position for connecting the control volume (15) to the venting port (1c),
wherein the inlet valve (10) and the outlet valve (11) can be actuated independently of one another, for example by a first electrical control signal (S1) and a second electrical control signal (S2).

10. Parking brake valve device (1) according to Claim 9, **characterized in that**
the bypass valve device (12, 112) comprises an inlet bypass line (19) connected between the compressed air inlet (1a) and the control volume (15) and having an inlet bypass valve (12) bypassing the inlet valve (10), wherein the inlet bypass valve (12) is automatically held in its activated passage position by the control volume (15) filled with control pressure,
wherein in the event of leakage from the outlet valve (11) switched to the closed position, the control volume (15) filled with control pressure automatically holds the inlet bypass valve (12) in its opened passage position in order to prevent unwanted venting of the control volume (15).

11. Parking brake valve device (1) according to Claim 9 or 10, **characterized in that**
the bypass valve device (12, 112) comprises an outlet bypass line (119) connected between the venting port (1c) and the control volume (15) and having an outlet bypass valve (112) bypassing the outlet valve (11), wherein the outlet bypass valve (112), in its normal position in which the control volume (15) is not filled with control pressure, is in the passage position for venting leakages from the closed inlet valve (10) and, on forming of the control pressure in the control volume (15), is held in its activated, closed position to prevent venting.

12. Parking brake valve device (1) according to one of the preceding claims, **characterized in that**, in the absence of electrical energy, the compressed air outlet (1b) can be drained via the relay valve (14), the control volume (15) and the bypass line (19).

13. Parking brake valve device (1) according to one of the preceding claims, **characterized in that** it is formed with a single housing.

14. Electro-pneumatic brake system (2), which comprises a parking brake valve device (1) according to one of the preceding claims, a compressed air supply (3) connected to the compressed air inlet (1a), a spring-loaded parking brake (4) connected to the compressed air outlet (1b) and an electronic control unit (8) for actuating the inlet and outlet valve device (10, 11).

15. Electro-pneumatic brake system (2) according to Claim 14, **characterized in that** it further comprises a brake system control valve (5) connected to the compressed air supply (3) and actuated by the electronic control unit (8) for filling a trailer brake circuit and/or connection to a trailer control valve (6), wherein the trailer brake circuit and/or the trailer control valve (6) can be connected to the compressed air outlet (1b) by the brake system control valve (5).

16. Electro-pneumatic brake system (2) according to Claim 15, **characterized in that** a check valve (16) is provided between the compressed air supply, in particular a compressed air reservoir (3), and the compressed air outlet (1b) of the electro-pneumatic brake system (2), wherein a trailer supply line (17) between the compressed air supply (3) and the brake system control valve (5) is situated outside the check valve (16).

## Revendications

1. Dispositif de soupape de frein à main électro-pneumatique (1) pour commander un frein de stationnement à accumulateur à ressort (4) dans un système de frein électro-pneumatique (2), le dispositif de soupape de frein à main (1) étant réalisé sous forme bistable avec une position de conduite et une position de stationnement en tant que positions stationnaires et présentant :
trois raccords pneumatiques (1a, 1b, 1c) qui constituent une entrée d'air comprimé (1a) pour le raccordement à une alimentation en air comprimé (3), une sortie d'air comprimé (1b) pour le raccordement au frein de stationnement à accumulateur à ressort (4), et un raccord de désaérage (1c),
une conduite de soupape-relais (20) reliant l'entrée d'air comprimé (1a) et la sortie d'air comprimé (lb), avec une soupape-relais (14) prévue dans la conduite de soupape-relais (20), pouvant être commandée pneumatiquement par un volume de commande (15),
un dispositif de soupape d'admission et d'échappement pouvant être commandé électriquement (10, 11) pour aérer le volume de commande (15) par connexion à l'entrée d'air comprimé (1a) et désaérer le volume de commande (15) par connexion au raccord de désaérage (1c),
**caractérisé en ce que**
une conduite de dérivation (19, 119) est prévue entre le volume de commande (15) et au moins l'un des raccords (1a, 1c), avec un dispositif de soupape de dérivation (12, 112) commandé pneumatiquement par le volume de commande (15), pour la connexion ou la séparation du volume de commande (15) avec l'au moins un raccord (1a, 1c), et
dans au moins l'une des positions stationnaires, le dispositif de soupape de dérivation (12, 112) est commandé par le volume de commande (15) de telle sorte qu'il surmonte le dispositif de soupape d'admission et d'échappement (10, 11) au moins en partie et relie le volume de commande (15) à l'au moins un raccord (1a, 1c).

2. Dispositif de soupape de frein à main (1) selon la revendication 1, **caractérisé en ce que** le dispositif de soupape de dérivation (12, 112) présente au moins une soupape de dérivation (12, 112a) pouvant être réglée entre une position de blocage et une position de passage, qui présente une première entrée de commande pneumatique (12a, 112a) qui peut être commandée par le volume de commande (15) pour retenir automatiquement la soupape de dérivation (12) dans sa position activée lorsque le volume de commande (15) est rempli et est soumis à la pression de commande.

3. Dispositif de soupape de frein à main (1) selon la revendication 2, **caractérisé en ce que** lorsque le volume de commande (15) n'est pas soumis à la pression de commande, l'au moins une soupape de dérivation (12) peut être commutée par une force antagoniste dans sa position de base.

4. Dispositif de soupape de frein à main (1) selon la revendication 3, **caractérisé en ce que** la force antagoniste est réalisée par une deuxième entrée de commande pneumatique (12b) raccordée au raccord d'entrée (la), ayant une plus petite surface d'action que la surface d'action de la première entrée de commande pneumatique (12a, 112a).

5. Dispositif de soupape de frein à main (1) selon la revendication 3, **caractérisé en ce que** la force antagoniste est réalisée par un premier ressort de précontrainte (12c, 112c).

6. Dispositif de soupape de frein à main (1) selon la revendication 5, **caractérisé en ce que** la soupape de dérivation (12) est précontrainte dans sa position de passage par un deuxième ressort de précontrainte (12d) lorsque la première et la deuxième entrée de commande pneumatique (12c, 12d) ne sont soumises à aucune pression.

7. Dispositif de soupape de frein à main (1) selon l'une quelconque des revendications précédentes, **caractérisé en ce que** la conduite de dérivation (19, 119) est réalisée sous forme étranglée ou avec une section transversale réduite par rapport à une conduite d'admission (21) et/ou une conduite de désaérage (22) commutée par le dispositif de soupape d'admission et d'échappement (10, 11), pour limiter un écoulement d'air comprimé à travers au moins une soupape de dérivation ouverte (12, 112) du dispositif de soupape de dérivation (12, 112).

8. Dispositif de soupape de frein à main (1) selon la revendication 7, **caractérisé en ce qu'**un étranglement (18, 118) est disposé dans la conduite de dérivation (19, 119), avant, derrière ou dans la soupape de dérivation (12, 112) du dispositif de soupape de dérivation (12, 112).

9. Dispositif de soupape de frein à main (1) selon l'une quelconque des revendications précédentes, **caractérisé en ce que** le dispositif de soupape d'admission et d'échappement (11, 12) présente une soupape d'admission (10) commandée électriquement, pouvant être commutée entre une position de blocage et une position de passage pour relier le volume de commande (15) à l'entrée d'air comprimé (la), et une soupape d'échappement (11) commandée électriquement, pouvant être commutée entre une position de blocage et une position de passage pour relier le volume de commande (15) au raccord de désaérage (1c),
la soupape d'admission (10) et la soupape d'échappement (11) pouvant être commandées indépendamment l'une de l'autre, par exemple par un premier signal de commande électrique (S1) et un deuxième signal de commande électrique (S2).

10. Dispositif de soupape de frein à main (1) selon la revendication 9, **caractérisé en ce que**
le dispositif de soupape de dérivation (12, 112) présente une conduite de dérivation d'entrée (19) commutée entre l'entrée d'air comprimé (1a) et le volume de commande (15), avec une soupape de dérivation d'entrée (12) surmontant la soupape d'admission (10),
la soupape de dérivation d'entrée (12) étant retenue automatiquement dans sa position de passage actionnée par le volume de commande (15) rempli avec la pression de commande,
et en cas de fuite de la soupape d'échappement (11) commutée dans la position de blocage, le volume de commande (15) rempli avec la pression de commande retenant automatiquement la soupape de dérivation d'entrée (12) dans sa position de passage ouverte, pour éviter un désaérage indésirable du volume de commande (15).

11. Dispositif de soupape de frein à main (1) selon la revendication 9 ou 10, **caractérisé en ce que**
le dispositif de soupape de dérivation (12, 112) présente une conduite de dérivation de sortie (119) commutée entre le raccord de désaérage (1c) et le volume de commande (15), avec une soupape de dérivation de sortie (112) surmontant la soupape d'échappement (11),
la soupape de dérivation de sortie (112), dans sa position de base, lorsque le volume de commande (15) n'est pas rempli avec la pression de commande, étant dans la position de passage pour le désaérage de fuites de la soupape d'admission (10) fermée et, lors de l'établissement de la pression de commande dans le volume de commande (15), étant retenue dans sa position de blocage activée, pour éviter un désaérage.

12. Dispositif de soupape de frein à main (1) selon l'une quelconque des revendications précédentes, **caractérisé en ce que** dans le cas d'une panne d'alimentation électrique, la sortie d'air comprimé (1b) peut être vidée par le biais de la soupape-relais (14), du volume de commande (15) et de la conduite de dérivation (19).

13. Dispositif de soupape de frein à main (1) selon l'une quelconque des revendications précédentes, **caractérisé en ce qu'**il est réalisé avec un boîtier unique.

14. Système de freinage électro-pneumatique (2), qui présente un dispositif de soupape de frein à main (1) selon l'une quelconque des revendications précédentes, une alimentation en air comprimé (3) raccordée à l'entrée d'air comprimé (la), un frein de stationnement à accumulateur à ressort (4) raccordé à la sortie d'air comprimé (1b) et un dispositif de commande électronique (8) pour commander le dispositif de soupape d'admission et d'échappement (10, 11).

15. Système de freinage électro-pneumatique (2) selon la revendication 14, **caractérisé en ce qu'**il présente en outre une soupape de commande de système de freinage (5) commandée par le dispositif de commande électronique (8), raccordée à l'alimentation en air comprimé (3), pour remplir un circuit de freinage de remorque et/ou pour le raccordement à une soupape de commande de remorque (6), le circuit de freinage de remorque et/ou la soupape de commande de remorque (6) pouvant être commuté (e) par la soupape de commande du système de freinage (5) sur la sortie d'air comprimé (1b).

16. Système de freinage électro-pneumatique (2) selon la revendication 15, **caractérisé en ce qu'**un clapet de retenue (16) est prévu entre l'alimentation en air comprimé, en particulier un accumulateur d'air comprimé (3), et la sortie d'air comprimé (1b) du système de freinage électro-pneumatique (2), une conduite d'alimentation de remorque (17) étant située entre l'alimentation en air comprimé (3) et la soupape de commande de système de freinage (5) à l'extérieur du clapet de retenue (16).
